# EUROPÄISCHE PATENTSCHRIFT

(11) **EP 2 391 909 B1**
(45) Veröffentlichungstag und Bekanntmachung des Hinweises auf die Patenterteilung: **01.03.2017**
(21) Anmeldenummer: 09764506.3
(22) Anmeldetag: 02.12.2009
(51) Int. Cl.: G01S 13/93, G01S 13/95, G01S 7/41

(54) **VERFAHREN ZUR DETEKTION VON NIEDERSCHLAG MIT EINEM RADARORTUNGSGERÄT FÜR KRAFTFAHRZEUGE**
METHOD FOR THE DETECTION OF PRECIPITATION USING A RADAR LOCATING DEVICE FOR MOTOR VEHICLES
PROCÉDÉ POUR DÉTECTER DES PRÉCIPITATIONS À L'AIDE D'UN APPAREIL DE LOCALISATION PAR RADAR POUR DES VÉHICULES À MOTEUR

(30) Priorität: 29.01.2009 DE 102009000469
(43) Veröffentlichungstag der Anmeldung: 07.12.2011
(73) Patentinhaber: Robert Bosch GmbH, 70442 Stuttgart (DE)
(72) Erfinder: HEILMANN, Stefan, 71229 Leonberg (DE); KUEHNLE, Goetz, 71282 Hemmingen (DE); BECHLER, Dirk, 76185 Karlsruhe (DE)
(86) Internationale Anmeldenummer: PCT/EP2009/066217
(87) Internationale Veröffentlichungsnummer: WO 2010/086050

(56) Entgegenhaltungen:
- DE-A1-102006 054 320
- JP-A- 4 309 883
- BLAKE S: "OS-CFAR theory for multiple targets and nonuniform clutter" IEEE TRANSACTIONS ON AEROSPACE AND ELECTRONIC SYSTEMS, Bd. 24, Nr. 6, November 1988 (1988-11), Seiten 785-790, XP002564047 USA ISSN: 0018-9251

## Beschreibung

### Stand der Technik

Die Erfindung betrifft ein Verfahren zur Detektion von Niederschlag mit einem Radarsystem für Kraftfahrzeuge, das zur Ortung von Objekten im Umfeld des Fahrzeugs ausgebildet ist, bei welchem Verfahren ein Ortungssignal, das ein Maß für die empfangene Leistungsdichte als Funktion des Abstands darstellt, über einen bestimmten Abstandsbereich integriert wird, der unterhalb eines Grenzabstands für die Detektion von Niederschlag liegt.

Radarortungsgeräte werden häufig in Fahrerassistenzsystemen für Kraftfahrzeuge eingesetzt, beispielsweise für eine automatische Abstandsregelung oder zur frühzeitigen Erkennung einer Kollisionsgefahr.

Niederschlag in der Form von Regen oder auch von der Straße aufspritzende Gischt kann einen Teil der emittierten Radarstrahlung reflektieren und so eine Verringerung der Reichweite der Radarstrahlung und damit eine Verringerung der Ortungstiefe des Radarsensors verursachen. Aus Gründen der Verkehrssicherheit ist es wichtig, daß eine solche Einschränkung der Funktion des Radarortungsgerätes möglichst unverzüglich festgestellt werden kann.

DE 10 2006 054 320 A1 beschreibt ein Verfahren der eingangs genannten Art für ein Mehrstrahlradar, speziell für ein FMCW-Radarortungsgerät. Bei diesem Verfahren werden die Ortungssignale mehrerer Radarstrahlen jeweils gesondert integriert, und die resultierenden Integrale werden miteinander verglichen.

Das Funktionsprinzip eines FMCW-Radarortungsgerätes (Frequency Modulated Continuous Wave) besteht darin, daß das Radarsignal kontinuierlich ausgesendet wird, jedoch die Frequenz dieses Signals periodisch mit steigenden und fallenden Rampen moduliert wird (der Bergriff "Rampe" soll hier nicht bedeuten, daß die Frequenzmoduation innerhalb der "Rampe" zwingend linear sein muß). Ein Mischer mischt einen Teil des Sendesignals mit dem von der Antenne empfangenen Signal und erzeugt so ein Mischprodukt, dessen Frequenz der Differenz zwischen der Frequenz des aktuellen Sendesignals und der Frequenz des empfangen Signals entspricht.

Wenn ein Radarecho von einem georteten Objekt empfangen wird, ist somit die Frequenz des Mischprodukts von der Signallaufzeit und damit vom Abstand des Objekts abhängig, aber aufgrund des Dopplereffektes auch von der Relativgeschwindigkeit des reflektierenden Objekts. Jedes geortete Objekt zeichnet sich deshalb im Spektrum, das aus dem Mischprodukt gebildet wird, auf jeder Modulationsrampe als ein Peak bei der vom Abstand und der Relativgeschwindigkeit abhängigen Frequenz ab. Durch Vergleich der Frequenzlagen von Peaks, die von demselben Objekt stammen, auf Modulationsrampen mit unterschiedlicher Steigung lassen sich dann der Abstand und die Relativgeschwindigkeit des Objekts bestimmen.

Auch Regentropfen oder aufspritzende Gischt stellen in diesem Sinne "Objekte" dar, die bei nicht zu großen Abständen vom Radarsensor, beispielsweise bei Abständen bis zu etwa 10 - 50 m, einen schwachen aber immerhin noch detektierbaren Peak im Spektrum hinterlassen. Bei stärkerem Niederschlag addieren sich diese Peaks in dem Frequenzbereich, der dem oben genannten Abstandsbereich entspricht, zu einem Untergrundsignal, dem sogenannten Regenclutter. Die Leistung dieses Regenclutters ist somit ein Maß für das Vorhandensein und die Stärke von Niederschlag.

Wenn sich allerdings im Ortungsbereich des Radarsensors und innerhalb des Abstandsintervalls, über das integriert wird auch "echte" Objekte wie beispielsweise vorausfahrende Fahrzeuge befinden, die im Spektrum einen wesentlich ausgeprägteren Peak hervorrufen, so wird das Integral durch diese Peaks verfälscht, so daß es nicht mehr als zuverlässiger Indikator für Niederschlag verwendet werden kann. Das bekannte Verfahren ist deshalb nur in Szenarien anwendbar, in denen sich in dem fraglichen Ortungsbereich keine echten Objekte befinden.

### Offenbarung der Erfindung

Aufgabe der Erfindung ist es, ein Verfahren zur Detektion von Niederschlag anzugeben, das robuster gegenüber solchen Störeinflüssen ist.

Diese Aufgabe wird erfindungsgemäß dadurch gelöst, daß das Ortungssignal vor der Integration einer Filterung unterzogen wird, die Peaks unterdrückt, die durch in dem bestimmten Abstandsbereich geortete Objekte verursacht werden, so daß das gefilterte Signal ein Maß für das Untergrundniveau als Funktion des Abstands bildet, und dass der Niederschlag dadurch detektiert wird, dass das Integral des gefilterten Signals mit einem bekannten Wert für das Integral des Rauschuntergrunds ohne Niederschlag verglichen wird.

### Vorteile der Erfindung

Bei dem erfindungsgemäßen Verfahren werden echte Objekte wie vorausfahrende Fahrzeuge und dergleichen durch die Filterprozedur gewissermaßen ausgeblendet, so daß die anschließende Integration im wesentlichen nur noch über diejenigen Signalanteile erfaßt, die durch Rauschen und Regenclutter (hier zusammenfassend als "Untergrund" bezeichnet) verursacht sind. Im Fall von Niederschlag bewirkt dann der Regenclutter, daß das Integral einen deutlich höheren Wert annimmt als im niederschlagsfreien Fall, in dem der Integrand im wesentlichen nur durch das Rauschniveau bestimmt ist. Bei einem FMCW-Radar kommt als weiterer Vorteil hinzu, daß das Verfahren auch unabhängig von der speziellen Wahl der Parameter der Modulationsrampen ist.

Vorteilhafte Ausgestaltungen und Weiterbildungen der Erfindung sind in den Unteransprüchen angegeben.

In einer vorteilhaften Ausführungsform handelt es sich bei dem Integranden um eine Detektionsschwelle, die durch eine Rauschschätzung gewonnen wird und zugleich dazu dienen kann, die echten Objektpeaks vom Rauschuntergrund (und gegebenenfalls dem Regenclutter) zu unterscheiden. Eine solche Rauschschätzung kann beispielsweise mit einem Rangordnungsfilter realisiert werden und ist in der Literatur unter dem Begriff "Ordered Statistic Constant False Alarm Rate" (OS-CFAR) bekannt (A. Ludloff: Praxiswissen - Radar und Radarsignalverarbeitung, 3. Auflage, Vieweg Verlag 2002, sowie BLAKE S: "OS-CFAR theory for multiple targets and nonuniform clutter" IEEE TRANSACTIONS ON AEROSPACE AND ELECTRONIC SYSTEMS, Bd. 24, Nr. 6, November 1988 (1988-11), Seiten 785-790, XP002564047 USA ISSN: 0018-9251)).

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: ein Blockdiagramm eines Radarortungsgerätes, mit dem das erfindungsgemäße Verfahren ausführbar ist;
- Fig. 2: eine Prinzipskizze zur Detektion von Niederschlag;
- Fig. 3: ein Beispiel einer Radarzelle für die Detektion von Niederschlag;
- Fig. 4 und 5: Beispiele für Ortungssignale mit und ohne Niederschlag;
- Fig. 6: den Einfluß eines Objekts auf das Integral des Ortungssignals; und
- Fig. 7 und 8: Beispiele für die Auswertung von Ortungssignalen nach dem erfindungsgemäßen Verfahren.

### Ausführungsformen der Erfindung

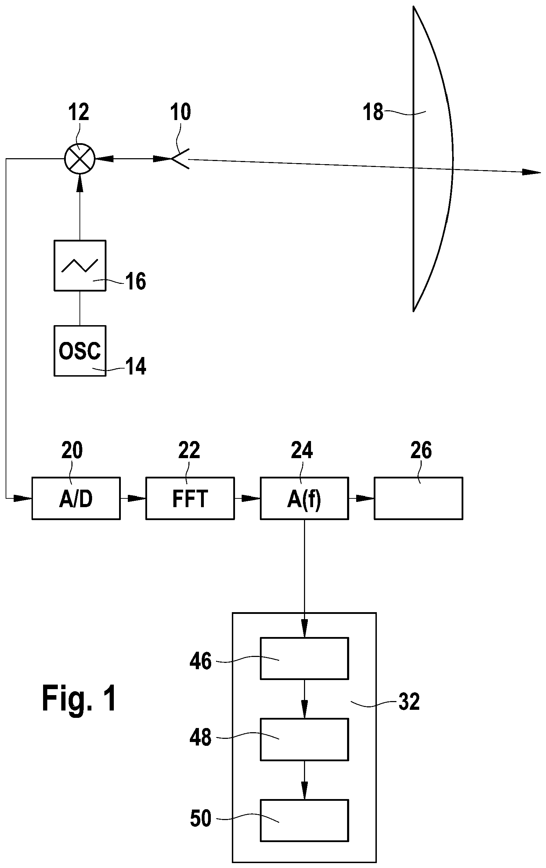

Das in Fig. 1 gezeigte Radarortungsgerät weist eine Antenne 10 auf, der über einen Mischer 12 ein von einem Oszillator 14 erzeugtes und von einem Modulator 16 frequenzmoduliertes Sendesignal zugeführt wird (FMCW-Radar). Das von der Antenne 10 emittierte Signal wird von einer Radarlinse 18 gebündelt.

Wenn von dem Radarortungsgerät ein (in Fig. 1 nicht gezeigtes) Objekt geortet wird, so wird das an dem Objekt reflektierte Signal durch die Linse wieder auf dieselbe Antenne 10 gebündelt, die das Sendesignal emittiert hat (monostatisches Antennenkonzept). Im Mischer 12 wird das empfangene Signal mit einem Anteil des Sendesignals gemischt, und als Mischprodukt erhält man ein zeitabhängiges Signal (Zwischenfrequenzsignal), das in einer Analog/Digital-Wandlerstufe 20 gesampelt und digitalisiert wird. In einer Transformationsstufe 22 wird das digitalisierte Signal beispielsweise durch Schnelle Fourier Transformation (FFT) in ein Spektrum umgewandelt, im folgenden als Ortungssignal 24 bezeichnet, das die Abhängigkeit der Amplitude des Mischprodukts von der Frequenz f angibt. Bei Vernachlässigung des Doppler-Effektes ist die Frequenz f proportional zum Abstand R des jeweiligen Reflexionsziels. Die Relativgeschwindgkeit der Regentropfen ist dem Betrage nach etwa gleich der Eigengeschwindigkeit des Fahrzeugs, das mit dem Radarsystem ausgerüstet ist. Diese Relativgeschwindgkeit führt deshalb zu einer Frequenzverschiebung, die sich rechnerisch bestimmen läßt. Zumindest innerhalb gewisser Grenzen kann somit gesagt werden, daß das Ortungssignal 24 mittelbar auch ein Maß für die empfangene Leistungsdichte als Funktion des Abstands R darstellt. Im folgenden soll deshalb - etwas vereinfachend - das Ortungssignal als Funktion des Abstands betrachtet werden. In einer Auswertungsstufe 26 wird das Ortungssignal 24 weiter ausgewertet, um die Abstände und Relativgeschwindigkeiten der georteten Objekte und - bei einem Mehrstrahlradar - auch deren Azimutwinkel zu bestimmen.

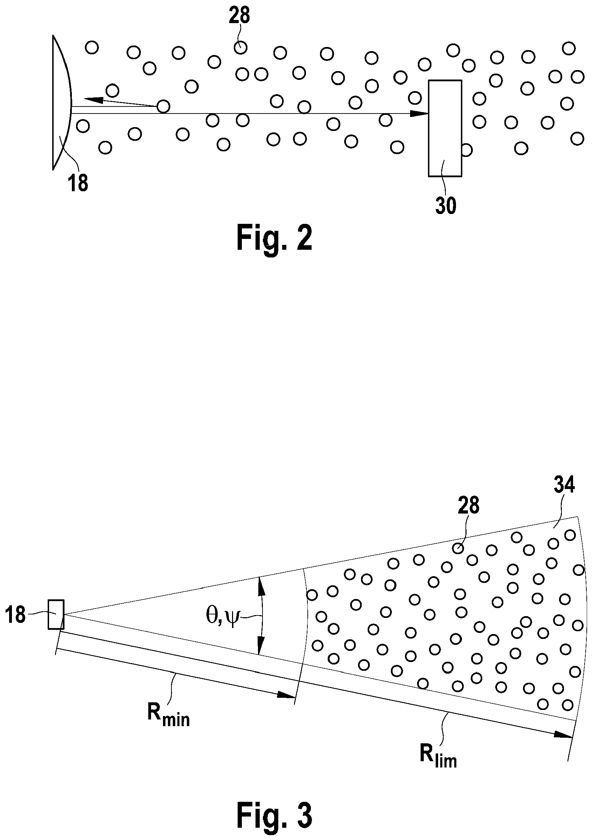

In Fig. 2 ist Niederschlag in der Form von Tropfen 28 dargestellt, die den gesamten Raum zwischen der Radarlinse 18 und einem zu ortenden Objekt 30 ausfüllen. Jeder der Tropfen 28 wirkt wie ein kleines Reflexionsziel, das einen kleinen Peak im Spektrum, d. h., im Ortungssignal 24 hinterläßt. Diese Peaks sind über ein breites Frequenzband verstreut und tragen als sogenannter Regenclutter zum Untergrund bei, allerdings nur bis zu einer bestimmten Frequenzgrenze, die dem Grenzabstand Rₗᵢₘ entspricht, in dem noch ein Radarecho von den einzelnen Regentropfen nachweisbar ist (in der Praxis ca. 10 bis 50 m). Andererseits wird durch die Reflexionen an den einzelnen Tropfen 28 das Radarsignal geschwächt, das das Objekt 30 erreicht und nach Reflexion wieder vom Ortungsgerät empfangen wird. Das kann, etwa bei sehr starkem Regen, dazu führen, daß die Empfindlichkeit des Ortungsgerätes erheblich eingeschränkt ist.

Das Radarortungsgerät weist deshalb eine Detektionseinrichtung 32 auf, die es erlaubt, das Vorhandensein von Niederschlag festzustellen und die Stärke des Niederschlags quantitativ zu bewerten, so daß sich abschätzen läßt, in welchem Ausmaß die Funktionsfähigkeit des Ortungssystems durch Niederschlag beeinträchtigt wird. Zu diesem Zweck wertet die Detektionseinrichtung 32 das Ortungssignal 24 aus, wie im Folgenden näher beschrieben wird.

Fig. 3 zeigt schematisch eine Radarzelle 34, innerhalb derer Regenclutter detektiert werden kann. Die Radarzelle 34 erstreckt sich in der Horizontalen über einen bestimmten Azimutwinkelbereich und in der Vertikalen über einen bestimmten Elevationswinkelbereich . Diese Winkelbereiche sind durch die Form der vom Radarortungsgerät ausgehenden Radarkeulen bestimmt. In radialer Richtung reicht die Radarzelle 34 von einem gewissen Mindestabstand Rₘᵢₙ, unterhalb dessen eine verläßliche Ortung von Reflexionszielen nicht mehr möglich ist, bis zu dem erwähnten Grenzabstand Rₗᵢₘ, bis zu dem das Radarecho der einzelnen Tropfen 28 noch als Regenclutter meßbar ist.

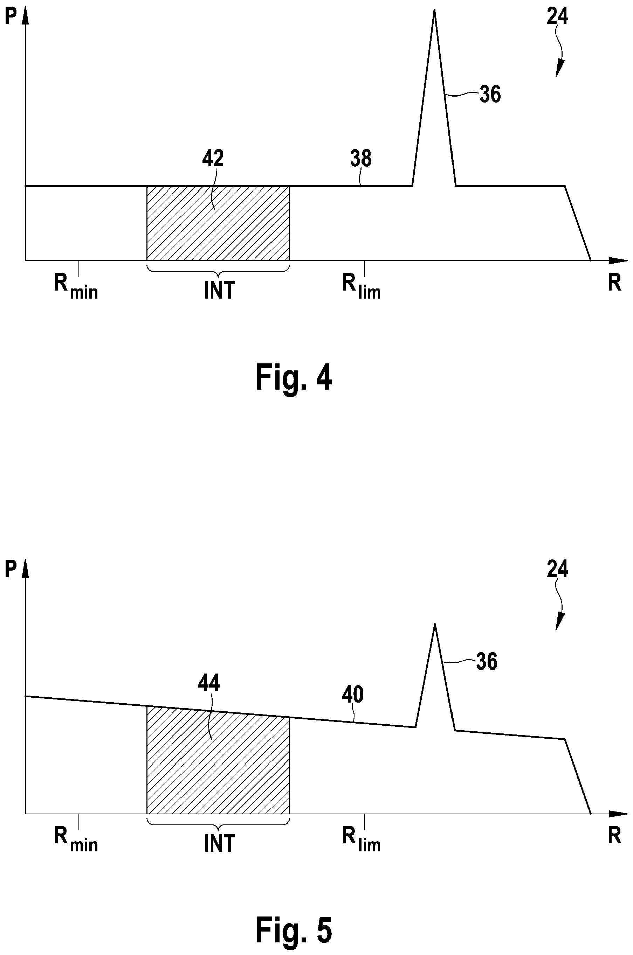

Fig. 4 zeigt schematisch einen typischen Verlauf des Ortungssignals 24 für den Fall, daß kein Niederschlag vorhanden ist. Im gezeigten Beispiel repräsentiert ein Peak 36, der sich deutlich vom Rauschuntergrund 38 abhebt, ein geortetes Objekt, dessen Abstand hier jedoch größer ist als der Grenzabstand Rₗᵢₘ für die Detektion von Niederschlag. Für alle übrigen Frequenzen und Abstände ist die Höhe des Ortungssignals 24 hier durch den Pegel des Rauschuntergrunds 38 gegeben, der näherungsweise über den gesamten Abstandsbereich konstant ist.

Zum Vergleich zeigt Fig. 5 den schematischen Verlauf des Ortungssignals 24 mit Niederschlag. Die Schwächung des Radarsignals durch die Reflexion an den Tropfen 28 führt zunächst dazu, daß die Höhe des Peaks 36 verringert ist. Andererseits bewirkt die Reflexion an diesen Tropfen den erwähnten Regenclutter, der in Fig. 5 außerhalb des Peaks 36 in Form eines Untergrundsignals 40, zu erkennen ist, das höher ist als der Rauschuntergrund 38 in Fig. 4 und außerdem mit zunehmendem Abstand abnimmt. Ab dem Grenzabstand Rₗᵢₘ ist der Regenclutter nicht mehr vom normalen Rauschuntergrund zu unterscheiden und daher nicht mehr detektierbar.

Eine Detektion von Niederschlag ist nun im Prinzip dadurch möglich, daß die Leistungsdichte des Ortungssignals 24 über ein Abstandsintervall INT integriert wird, das zwischen dem Mindestabstand Rₘᵢₙ und dem Grenzabstand Rₗᵢₘ liegt. In Fig. 4 und 5 werden die entsprechenden Integrale durch die Flächeninhalte von schraffiert eingezeichneten Flächen 42, 44 repräsentiert. Da der normale Rauschuntergrund 38 für einen gegebenen Typ des Radarortungsgerätes bekannt ist, kennt man auch den Wert des durch die Fläche 42 repräsentierten Integrals, und wenn der aktuelle Wert des Integrals, entsprechend der Fläche 44 in Fig. 5, deutlich größer ist, so deutet dies auf die Anwesenheit von Niederschlag hin, und der durch die Differenz zwischen den Flächen 44 und 42 repräsentierte Wert gibt ein Maß für die Stärke des Niederschlages an.

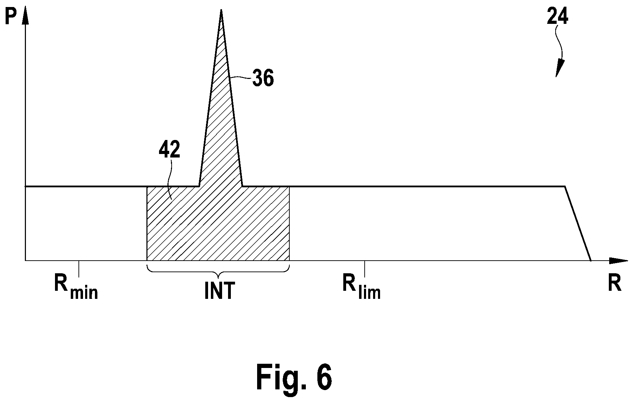

Wenn sich jedoch, wie in dem in Fig. 6 illustrierten Fall, mindestens ein Objekt (Peak 36) in dem Abstandsintervall INT befindet, über das bei der Niederschlagsdetektion integriert werden soll, so erhöht sich auch in niederschlagsfreiem Fall der Flächeninhalt der Fläche 42 und damit der Wert des Integrals um den Flächeninhalt des Peaks 36, und es läßt sich nicht entscheiden, ob die Zunahme des Integrals allein durch das Objekt oder zusätzlich auch durch Niederschlag verursacht wird.

Bei dem hier vorgeschlagenen Verfahren wird deshalb nicht unmittelbar das Ortungssignal 24 integriert, sondern zunächst wird dieses Ortungssignal einer Filterprozedur unterzogen, beispielsweise einer Rausch-Schätzung, mit der für jeden Frequenzwert eine Detektionsschwelle bestimmt wird, die ein von einem Objekt verursachter Peak 36 mindestens überragen muß, damit das entsprechende Objekt sicher detektiert werden kann.

In Fig. 1 umfasst demgemäß die Detektionseinrichtung 32 eine Filterstufe 46 für die Rausch-Schätzung, eine Integrationsstufe 48 für die Integration des gefilterten Signals, und eine Vergleichesstufe 50 zum Vergleich des Integrals mit dem bekannten Integral über die Detektionsschwelle in Abwesenheit von Niederschlag.

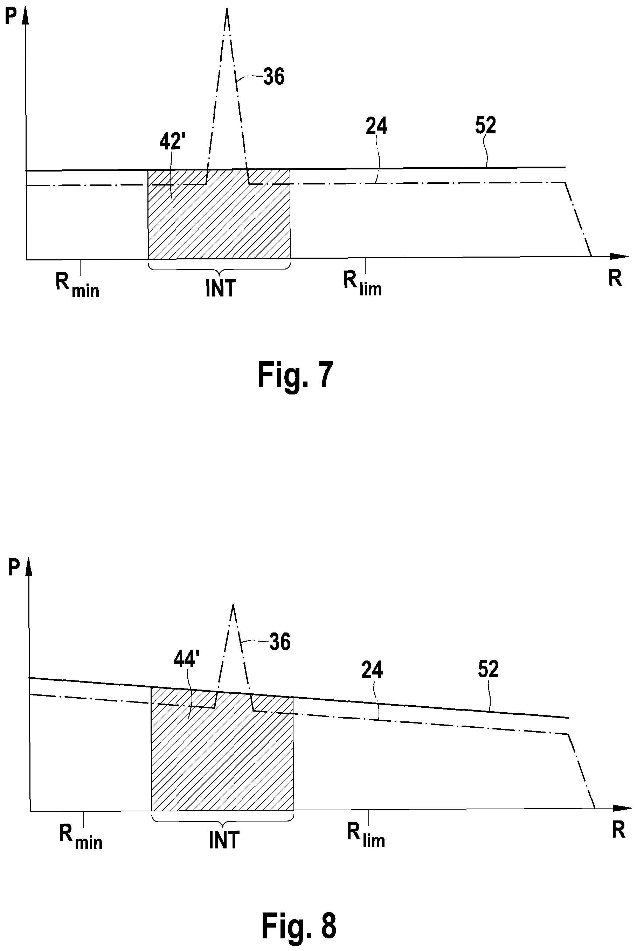

In Fig. 7 und 8, von denen Fig. 7 wieder den niederschlagsfreien Zustand und Fig. 8 den Zustand mit Niederschlag repräsentiert, ist jeweils das Ortungssignal 24 durch eine strichpunktierte Kurve angeben, während die Detektionsschwelle 52 (als Funktion von R) durch eine durchgezogene Kurve angegeben ist. Wie man in Fig. 7 und 8 erkennt, verläuft die Detektionsschwelle 52 jeweils etwa parallel zum Untergrundsignal (spezieller: in etwa gleichbleibendem Abstand oberhalb dieses Untergrundsignals), während sie jeden von einem Objekt herrührenden Peak 36 gewissermaßen "ausblendet". Wenn man nun die Detektionsschwelle 52 über das Intervall INT integriert, so sind die erhaltenen Integrale (Fläche 42' in Fig. 7 bzw. Fläche 44' in Fig. 8) unabhängig davon, ob sich in dem Intervall INT ein Objekt befindet oder nicht. Durch Vergleich der Integrale in der Vergleichsstufe 50 kann deshalb zuverlässig festgestellt werden, ob Niederschlag vorhanden ist oder nicht, und das Detektionsverfahren ist robust gegenüber der An- oder Abwesenheit von Objekten in dem relevanten Abstandsbereich.

Während im gezeigten Beispiel das Spektrum des Zwischenfrequenzsignals ausgewertet wird, ist es in einer modifizierten Ausführungsform auch möglich, auf entsprechende Weise das in der Analog/Digital-Wandlerstufe 20 erhaltene Zeitsignal auszuwerten.

## Patentansprüche

1. Verfahren zur Detektion von Niederschlag mit einem Radarortungsgerät für Kraftfahrzeuge, das zur Ortung von Objekten (30) im Umfeld des Fahrzeugs ausgebildet ist, bei welchem Verfahren ein Ortungssignal (24), das ein Maß für die empfangene Leistungsdichte als Funktion des Abstands (R) darstellt, über einen bestimmten Abstandsbereich (INT) integriert wird, der unterhalb eines Grenzabstands (Rₗᵢₘ) für die Detektion von Niederschlag liegt, **dadurch gekennzeichnet, daß** das Ortungssignal (24) vor der Integration einer Filterung (48) unterzogen wird, die Peaks (36) unterdrückt, die durch in dem bestimmten Abstandsbereich (INT) geortete Objekte verursacht werden, so daß das gefilterte Signal (52) ein Maß für das Untergrundniveau als Funktion des Abstands (R) bildet, und dass der Niederschlag dadurch detektiert wird, dass das Integral (44') des gefilterten Signals (52) mit einem bekannten Wert für das Integral (42') des Rauschuntergrunds (38) ohne Niederschlag verglichen wird.

2. Verfahren nach Anspruch 1, bei dem das gefilterte Signal eine Detektionsschwelle (52) ist, die es erlaubt, anhand des Kriteriums, daß ein Peak (36) im Ortungssignal (24) die Detektionsschwelle (52) übersteigt, zu entscheiden, ob der Peak ein geortetes Objekt repräsentiert.

3. Radarortungsgerät für Kraftfahrzeuge, das zur Ortung von Objekten im Umfeld des Fahrzeugs ausgebildet ist, **gekennzeichnet durch** eine Detektionseinrichtung (32), in der das Verfahren nach Anspruch 1 oder 2 implementiert ist.

## Claims

1. Method for detecting precipitation using a radar locating device for motor vehicles, which method is designed to determine the location of objects (30) in the surroundings of the vehicle, in which method a location-determining signal (24) which constitutes a measure for the received power density as a function of the distance (R) is integrated over a specific distance range (INT) which is below a limiting distance (Rₗᵢₘ) for the detection of precipitation, **characterized in that** the location-determining signal (24) is subjected to filtering (48) before the integration, which filtering (48) suppresses peaks (36) which are caused by objects located in the specific distance range (INT), with the result that the filtered signal (52) forms a measure of the underground level as a function of the distance (R), and **in that** the precipitation is detected as a result of the fact that the integral (44') of the filtered signal (52) is compared with a known value for the integral (42') of the noise underground (38) without precipitation.

2. Method according to Claim 1, in which the filtered signal is a detection threshold (52) which permits a decision as to whether the peak represents a located object on the basis of the criterion that a peak (36) in the location-determining signal (24) exceeds the detection threshold (52).

3. Radar-locating device for motor vehicles, which device is designed to determine the location of objects in the surroundings of the vehicle, **characterized by** a detection device (32) in which the method according to Claim 1 or 2 is implemented.

## Revendications

1. Procédé de détection de précipitation au moyen d'un appareil de localisation par radar pour véhicules automobiles, qui est conçu pour localiser des objets (30) dans l'environnement du véhicule, procédé dans lequel un signal de localisation (24), qui représente une mesure de la densité de puissance reçue en fonction de la distance (R), est intégré sur une plage de distances déterminée (INT) qui se situe en dessous d'une distance limite (Rₗᵢₘ) pour la détection de précipitation, **caractérisé en ce que** le signal de localisation (24) est soumis, avant l'intégration, à un filtrage (48) qui supprime des pics (36) provoqués par des objets localisés dans la plage de distances déterminée (INT), de manière à ce que le signal filtré (52) constitue une mesure du niveau de fond en fonction de la distance (R), et **en ce que** la précipitation est détectée en comparant l'intégrale (44') du signal filtré (52) à une valeur connue de l'intégrale (42') du bruit de fond (38) sans précipitation.

2. Procédé selon la revendication 1, dans lequel le signal filtré est un seuil de détection (52) qui permet, sur la base du critère selon lequel un pic (36) présent dans le signal de localisation (24) dépasse le seuil de détection (52), de déterminer si le pic représente un objet localisé.

3. Appareil de localisation par radar pour véhicules automobiles, qui est conçu pour localiser des objets dans l'environnement du véhicule, **caractérisé par** un dispositif de détection (32) dans lequel le procédé selon la revendication 1 ou 2 est mis en oeuvre.
